Europäisches Patentamt

European Patent Office

Office européen des brevets

(19)

(11) Publication number: **0 105 515**
**A1**

(12) **EUROPEAN PATENT APPLICATION**

(21) Application number: **83109868.6**

(22) Date of filing: **03.10.83**

(51) Int. Cl.³: **F 16 H 37/08**
**F 16 H 47/04**

(30) Priority: **04.10.82 JP 173339/82**

(43) Date of publication of application:
**18.04.84 Bulletin 84/16**

(84) Designated Contracting States:
**DE FR GB IT**

(71) Applicant: **NISSAN MOTOR COMPANY, LIMITED**
**No.2, Takara-cho, Kanagawa-ku**
**Yokohama-shi Kanagawa-ken 221(JP)**

(72) Inventor: **Hiraiwa, Kazuyoshi**
**No. 81-9 Onna**
**Atsugi City(JP)**

(74) Representative: **Patentanwälte Grünecker, Dr.**
**Kinkeldey, Dr. Stockmair, Dr. Schumann, Jakob, Dr.**
**Bezold, Meister, Hilgers, Dr. Meyer-Plath**
**Maximilianstrasse 58**
**D-8000 München 22(DE)**

(54) **Split-torque power transmission.**

(57) The transmission includes a stepless "V" belt type speed change device (40, 36, 42, 38) and in which the torque is split and recombined in a planetary differential device (32).

Either the shaft (40) or the shaft (42) of the V belt change speed unit (40,36,42,38) may be clutched to the input shaft (20) through clutches (24,44). In a second embodiment, two additional planetary gear units are provided.

The gear train is arranged so that the rotational speed of the V belt pulleys rarely maximize and the shift between drive ranges effected by engaging/disengaging clutches falls in an infrequently experienced reduction ratio.

FIG. 4

SPLIT-TORQUE POWER TRANSMISSION

BACKGROUND OF THE INVENTION

Field of the Invention

The present invention relates generally to a split-torque power transmission and more specifically to a split-torque path transmission including a stepless change speed device.

Description of the Prior Art

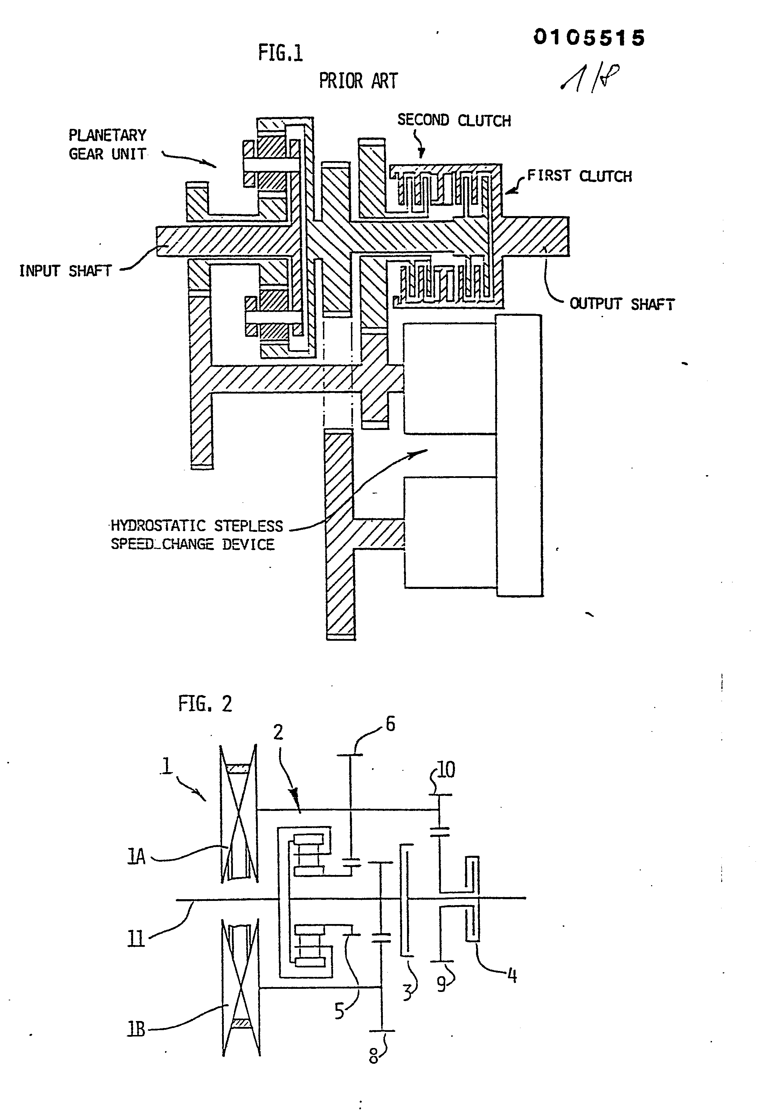

In a previously proposed split-torque power transmission illustrated in Fig. 1 of the drawings (disclosed in United States Patent 3,988,949 issued in November 2, 1976 in the name of Weseloh et al) a problem has been encountered when attempting to use a "V"-belt stepless type speed change device in place of the illustrated hydrostatic unit, in that the pulleys thereof are frequently subjected to high rotational speeds and therefore prone to rapid deterioration.

A further problem has been encountered in that when this type of transmission is used in an automotive vehicle, the clutches utilized therein must be engaged/disengaged to acheive a I - II (low - high) speed range shift at a frequently used speed reduction inducing an undesirable shift shock.

Fig. 2 shows schematically the arrangement shown in Fig. 1 equipped with the above mentioned "V"-belt speed change device. This arrangement includes a V-belt type stepless speed change device 1, a planetary gear unit 2, first and second clutches 3, 4 and gear sets 5,6 7,8 and 9,10.

With this arrangement, given (by way of example) that the reduction ratio of the V-belt speed change device is from 2.222 to 0.450, the radius ratio of the ring gear to the sun gear is 0.67, the reduction ratio between the gear set 5 and 6 is 2.252, the reduction ratio between the gear set 7 and 8 is 1.009 and the reduction ratio between the gear set 9 and 10 is 0.454; it is possible by changing the clutches 3 and 4 to obtain a reduction ratio of 3.695 - 0.992 in low range (I) and a reduction ratio of 0.992 - 0.673 in high range (II).

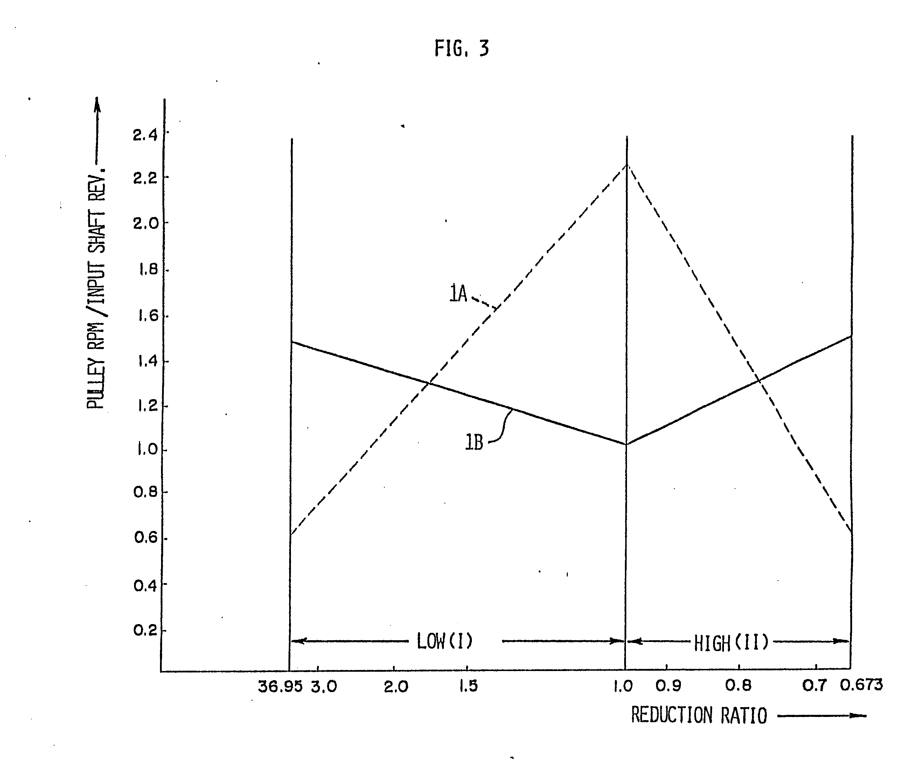

Fig. 3 shows the RPM of the pulleys 1A and 1B per rotation of the input shaft 11, in the above mentioned low and high speed ranges (I and II). As will be understood from the figure, the rotational speed of the pulley 1A tends to maximize in the vicinity of a gear reduction ratio of 1.0 (although this phenomenon varies with the various reduction ratios involved in the gear train). Furthermore, it will be apparent that the engagement/disengagement of the clutches 3 and 4 for the I - II shift occurs at or about the reduction ratio of 1.0.

## SUMMARY OF THE INVENTION

It is an object of the present invention to overcome the above mentioned drawbacks by providing a transmission including a "V" belt type stepless speed change device wherein the rotational speed of the pulleys involved therein tend to maximize as the reduction ratio of the transmission minimizes and the shift provided by engaging/disengaging clutches occurs at an infrequently used reduction ratio.

In brief the present invention takes the form of a split path transmission which includes a stepless "V" belt type speed change device and in which the torque is split and recombined in a planetary differential device. The gear train is arranged so that the rotational speed of the V belt pulleys rarely maximize and the shift between drive ranges effect by engaging/disengaging clutches falls in an infrequently experienced reduction ratio.

More specifically, the present invention takes the form of a transmission comprising an input shaft, a differential gear unit including first, second and third elements, a first clutch for selectively establishing a drive connection between the input shaft and the first element, a stepless speed change device having first and second shafts, the revolution ratio between which is continuously variable between predetermined limits, the first shaft being arranged in drive connection with the second element and the second shaft being arranged in drive connection with the first element, a second clutch for selectively establishing a drive connection between the input shaft and the first shaft of the stepless change speed device, and an output shaft connected to the third element.

## BRIEF DESCRIPTION OF THE DRAWINGS

The features and advantages of the arrangement of the present invention will become more clearly appreciated from the following description taken in conjunction with the accompanying drawings in which:

Fig. 1 is a sectional view of the prior art transmission referred to in the opening paragraphs of the present disclosure;

Fig. 2 is a schematic representation of the transmission shown in Fig. 1 equipped with a V-belt stepless speed change device, as per the discussion in the opening paragraphs of the present application;

Fig. 3 is a graph showing in terms of "pulley RPM/input shaft revolution" and "reduction ratio", the characteristics of the prior art arrangement which induce the previously discussed drawbacks;

Fig. 4 shows a first embodiment of the present invention;

Figs 5 and 6 illustrate the torque flow within the gear train of the first embodiment in low (I) and high (II) gear ratios, respectively;

Fig. 7 is a graph similar to that of Fig. 3 but which shows the operational characteristics acheived by the first embodiment of the present invention;

Fig. 8 is a schematic illustration of a second embodiment of the present invention;

Figs. 9 to 12 are figures illustrating the flow of torque within the second embodiment in low (I), medium (II), high (III) and reverse (R) drive ranges, respectively.

DESCRIPTION OF THE PREFERRED EMBODIMENTS

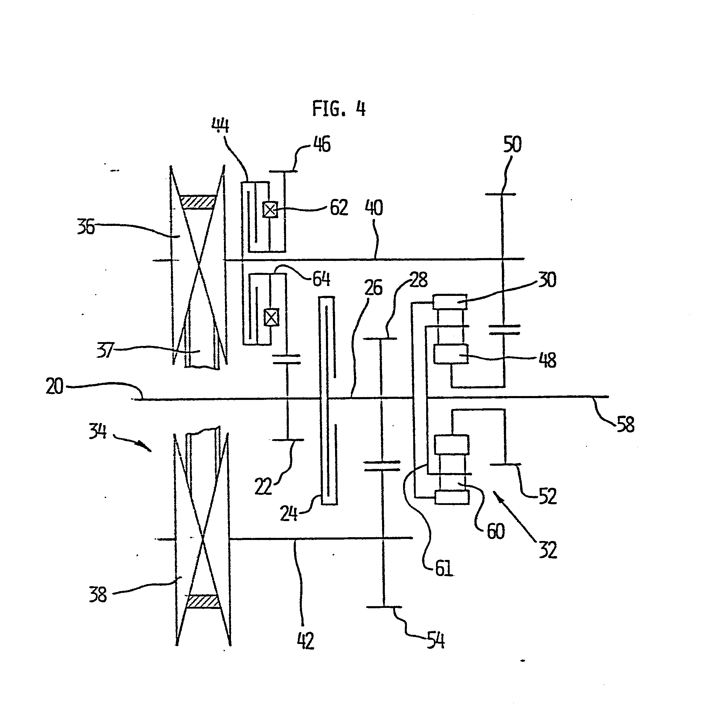

Turning now to Fig. 4, a first embodiment of the present invention is shown. In this arrangement an input shaft 20, adapted to be rotated by a suitable source of rotational energy such as an internal combustion engine, is arranged to carry a gear 22 thereon and to be operatively connected with a first clutch 24. The clutch 24 is arranged to selectively provide a drive connection between the input shaft 20 and an intermediate shaft 26. The intermediate shaft 26 is, as shown, provided with a gear 28 thereon and operatively connected to a ring gear 30 of a planetary gear set or unit generally denoted by the numeral 32.

The transmission further includes a V-belt stepless speed change device 34. This device, as shown, comprises first and second pulleys 36, 38 the cones of which are selectively movable toward and away from each other in response to a suitable control mechanism (not shown) and a "V" belt 37 operatively interconnecting said pulleys. This speed change device further includes first and second shafts 40, 42 synchronously rotatable with the pulleys 36, 38. As shown, the first shaft 40 is provided with a second clutch 44 for selectively providing a drive connection with the input shaft 20 via a gear 46 in constant mesh with gear 22. The first shaft 40 of the V belt stepless speed change unit 34 is connected with the sun gear 48 of the planetary gear unit 32 via a gears 50, 52. The second shaft 42 of the V belt stepless speed change unit 34 is connected with the intermediate shaft 26 via a gear 54 which is in constant mesh with gear 28. The output shaft 58 of the transmission is connected to the planet pinions 60 of the planetary gear unit 32 via pinion carrier 61.

This embodiment further includes a one-way clutch 62 interposed between a hollow shaft 64 on which the gear 46 is disposed and the second clutch 44. This one-way clutch is arranged to permit the shaft 40 to overrun the gear 46. The reason for this is to allow (when the transmission according to the first embodiment is used in a vehicle) the vehicle to coast freely without undergoing engine braking unless the clutch 44 is engaged.

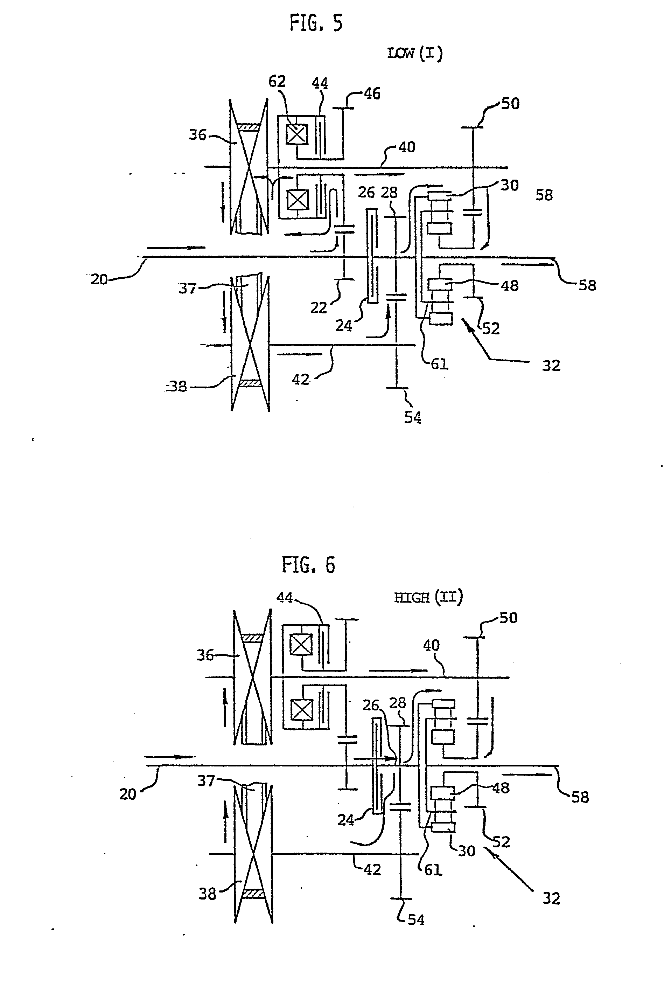

As shown in Figs. 5 and 6 the operation of the present invention is such that, in when in low (I) range the torque inputted to the transmission through the input shaft 20 flows via gears 22, 46 through the one-way clutch 62 and/or the second clutch 44 (if coupled) to the first shaft 40 of the V belt stepless speed change unit 34. At this point the torque is split into two flows. The first flow goes to the V belt stepless speed change unit 34 wherein it is transmitted from pulley 36 to pulley 38. This first flow is then transmitted via the rotation of shaft 42 , gears 54 and 28 to the intermediate shaft 26. The rotation of the intermediate shaft 26 is then transferred to the ring gear 30 of the planetary gear unit 32. The second flow is transmitted via shaft 40, gears 50, 52 to the sun gear 48 of the planetary gear unit 32. The divided torque flows are united at the planet pinion carrier 61 and outputted through the output shaft 58.

To achieve a I - II shift, clutch 24 is coupled and the clutch 44 uncoupled whereby, as shown in Fig. 6, torque is transmitted directly to intermediate shaft 26. At this point the torque flow is split. The first flow is transmitted via intermediate shaft 26 to the ring gear 30 of the planetary gear unit 32 while the second flow is transmitted via intermeshing gears 28 and 54 to shaft 42 of the V. The V belt stepless speed change device 34 then transmits torque from pulley 38 to pulley 36. From pulley 36 the second torque flow is transmitted via shaft 40, intermeshing gears 50 and 52 to the sun gear 48 of the planetary gear unit 32. At this point the two flows are united at the pinion carrier 61.

By way of example, let it be assumed that in the arrangement disclosed above, the speed reduction ratio between the gear 22 and the gear 46 is 2.47, the speed reduction between the gears 54 and 28 is 1, the radius ratio between the ring gear 30 and the sun gear 48 of the planet is 0.67, and the speed reduction between the pulleys 36 and 38 is 2.222 to 0.405.

Accordingly, in low speed (I) one rotation of the input shaft 20 induces 1/2.47 (0.45) rotations of the shaft 40 and therefore 1/2.47 rotations of the sun gear 48. Depending on the speed reduction ratio obtained through the V belt stepless speed change device 34, the shaft 42 makes (1/2.47)/2.222 : (1/2.47)/0.405 rotations (Viz., 0.182 to 1.000 rotations), while the ring gear undergoes 0.182 to 1.000 rotations. Accordingly, in view of the operational characteristics of the plantary gear unit of the nature employed in the first embodiment, the pinion carrier 61 will make 0.271 to 0.761 rotations. That is, one rotation of the input shaft 20 induces 0.271 to 0.761 rotations of the output shaft 58, whereby a speed reduction ratio of 3.690 to 1.314 is provided.

Upon a I – II shift, one rotation of the input shaft 20 induces the rotation of the both the ring gear 30 and 0.405 to 2.222 rotations of the sun gear 48, whereby the speed reduction ratio available is 1.314 to 0.671. Thus, the above described example of the first embodiment of the present invention is capable of producing a speed reduction ratio of 3.690 – 0.671.

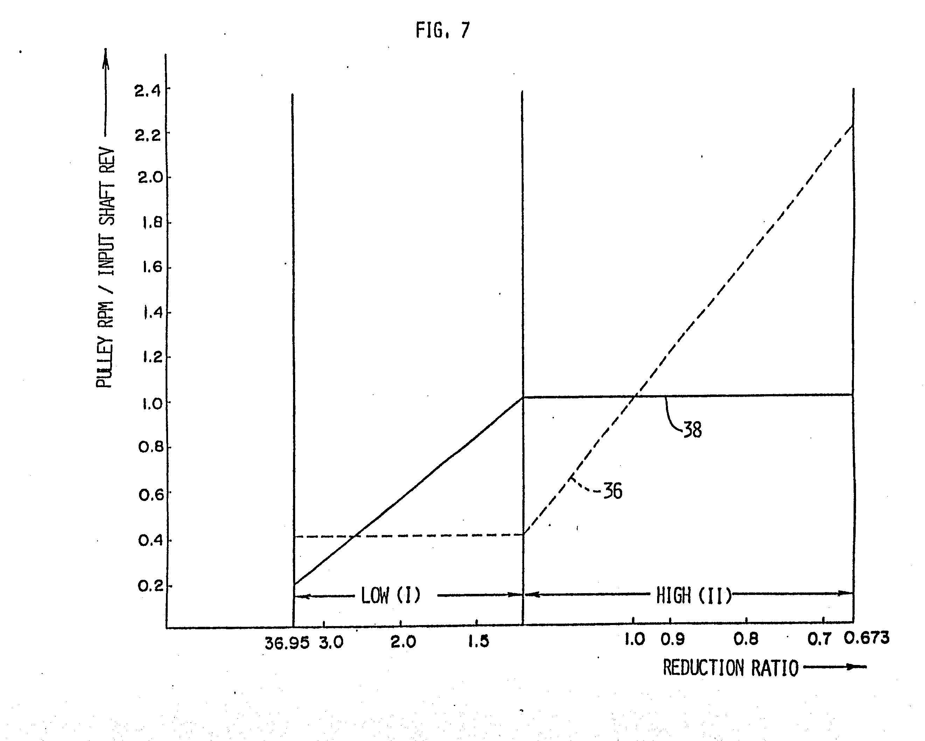

Fig. 7 shows the operational characteristics obtained with the above described example of the first embodiment of the present invention. As will be appreciated from this figure, the maximum rotational speed of the pulley 26 of the V belt stepless speed change device 34, occurs when the speed reduction of the transmission unit is minimized. Hence, in the situation wherein the present invention is applied to an automotive vehicle, the speed reduction range wherein the maximum rotational speed of the pulley 26 occurs, does not fall within a frequently used range whereby the time that the pulley 26 is subject to high speed rotation is minimized. The durablity of the V belt stepless speed change unit 34 is of course greatly enhanced via this characteristic. Moreover, the I - II shift occurs at a speed reduction of 1.3 which tends to fall outside of the commonly used speed reduction ratio range and therefore obviates the shift shock problem encountered with the prior art arrangement.

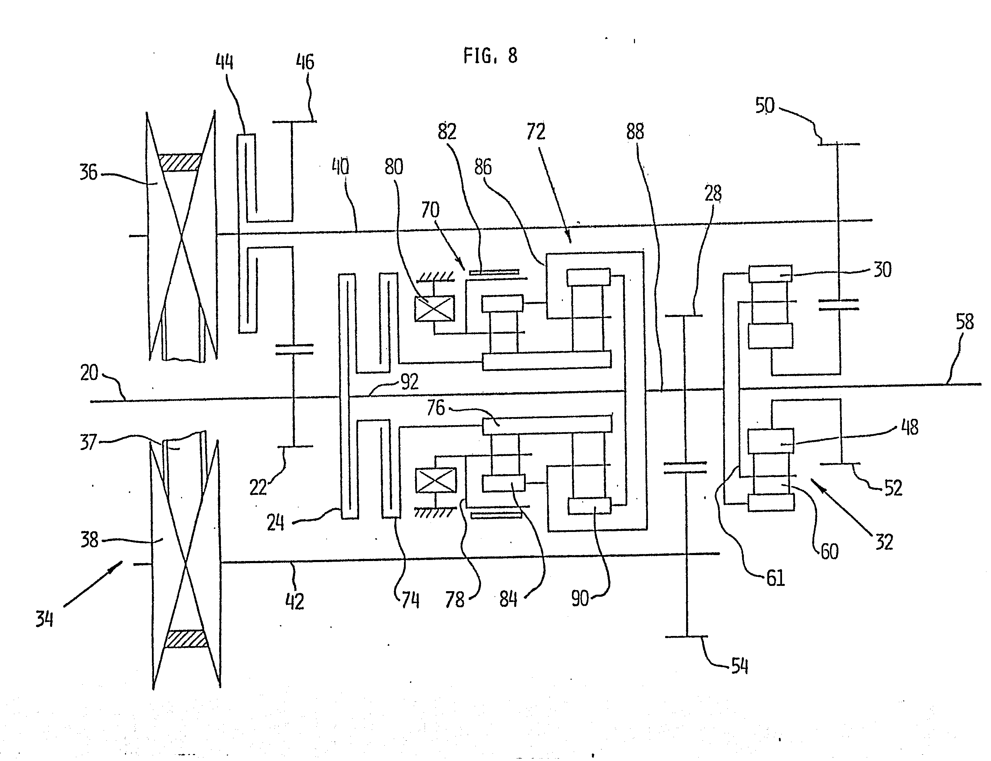

Fig. 8 shows a second embodiment of the present invention. In this arrangement, two additional planetary gear units (70, 72) are included in the basic arrangement of the first embodiment. As shown, these units are interposed between the clutch 24 and the gear 28 of said first embodiment.

More specifically, the second and third planetary gear units 70, 72 are arranged in a manner that a third clutch 74, which will be referred to as a "high and reverse" clutch, is arranged to selectively connect the input shaft 20 with a sun gear 76 which is common to both of the second and third units. The pinion carrier 78 of the second planetary gear unit 70 is connected to the transmission chassis (no numeral) through a one-way clutch 80 and a band brake 82. The ring gear 84 of the second unit 70 is connected to both of the pinion carrier 86 of the third unit 72 and to an intermediate shaft 88 on which the gear 28 is mounted in this embodiment.

The ring gear 90 of the third unit 72 is connected to an intermediate shaft 92 which, as shown, is connectable via the first clutch 24 to the input shaft 20. In this embodiment the first clutch 24 functions a "low" clutch. Further, in this embodiment the one-way clutch 62 associated with the second clutch 44 is omitted

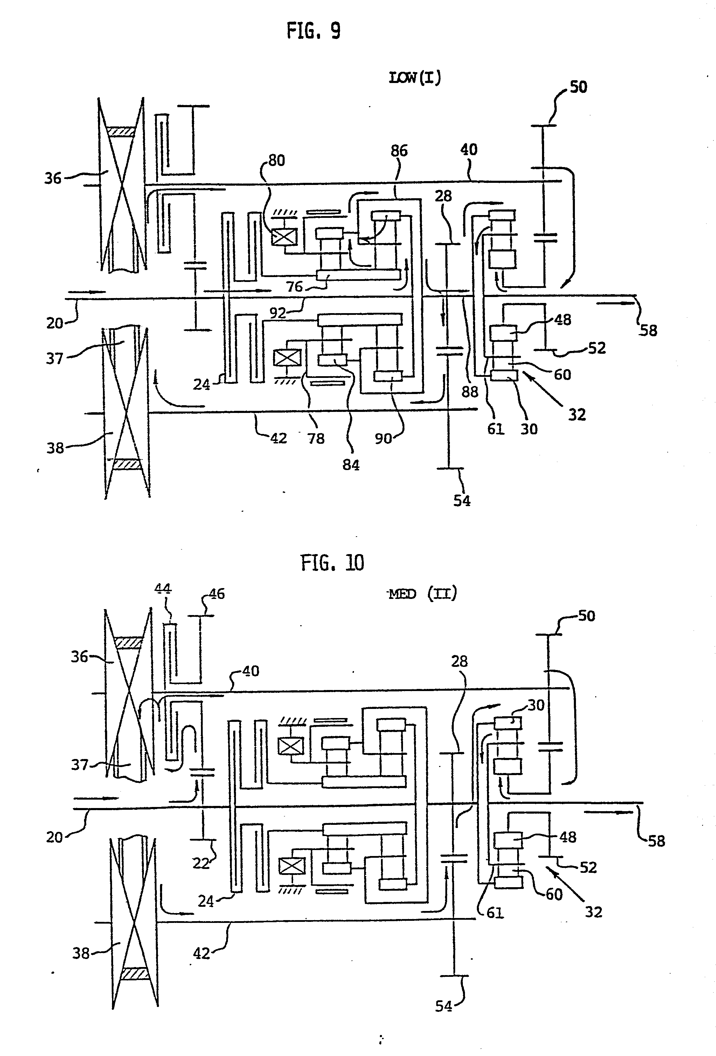

The operation the second embodiment is shown in Figures 9 to 12.

Fig. 9 shows the torque flow through the second embodiment during low (I) speed range. In low, clutch 24 is coupled so that torque inputted via the input shaft 20 flows via the intermediate shaft 92 to ring gear 90 of the third planetary gear unit 72 and therefrom to the pinion carrier 86 thereof. It will be noted that under these circumstances, the one-way clutch 80 (or alternatively the band brake 82 in the case that the one-way clutch 82 is omitted) prevents the rotation of the pinion carrier 78 and therefore induces a "reaction". The resulting rotation of the pinion carrier 86 is transmitted to shaft 88 and split so that the first torque flow acts on the ring gear 30 of the first planetary gear unit 32 and the second acts through gears 28, 54 to induce rotation of shaft 42. The second flow is transmitted via the V belt stepless speed change device 34 to shaft 40 and thereafter via gears 50, 52 to the sun gear 48 of the first planetary gear unit 32. The first and second flows are united at the pinion carrier 61 and used to drive the output shaft 58.

Fig. 10 shows the torque flow which occurs within the gear train of the second embodiment when operated in medium (II) speed range. To achieve the I - II shift, clutch 44 is coupled and clutch 24 uncoupled. Accordingly, the torque inputted via input shaft 20 is transmitted via gears 22 and 46 to shaft 40 where the torque is split into first and second flows. As shown the first flow is transmitted via the rotation of shaft 40, gears 50, 52 to sun gear 48. The second flow passes from pulley 36 to pulley 38, along shaft 42 to gears 54, 28 and thereafter to the ring gear 30 of the first planetary gear set 32. The two flows are united at the pinion carrier 61 and outputted via the output shaft 58.

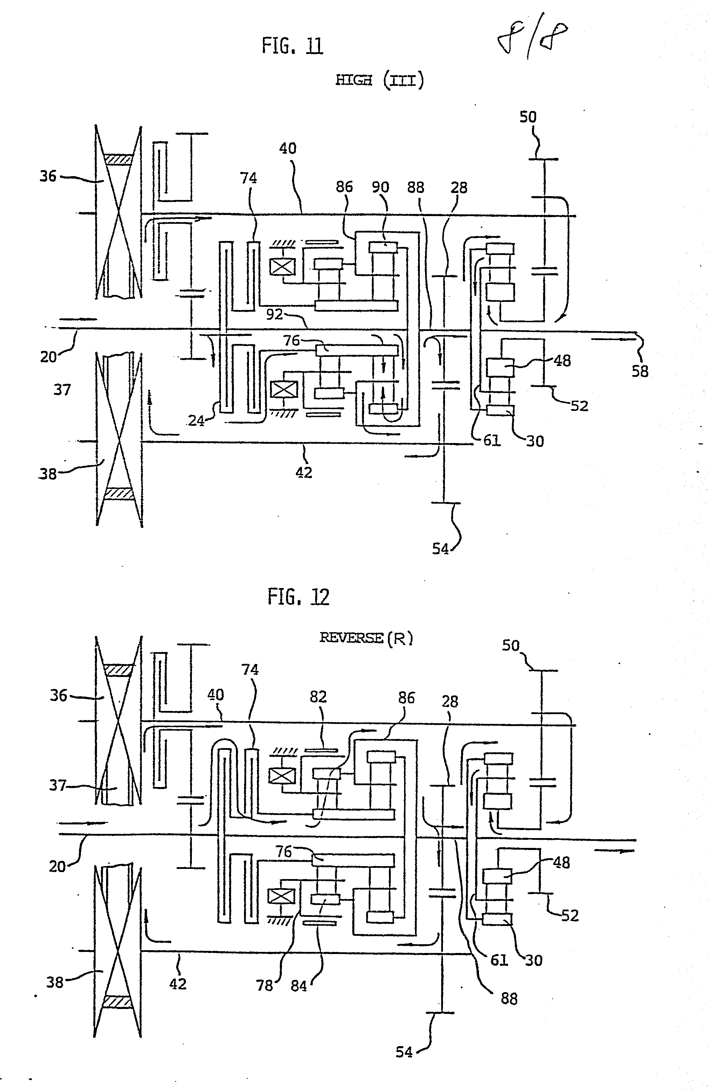

The medium - high (II - III) shift is carried out by coupling clutches 24 and 78 and releasing clutch 44. The torque flow which occurs in the second embodiment under these conditions is shown in Fig. 11. As indicated, a first "split" in torque flow occurs via the coupled clutches 24 and 78 wherein a "first" flow is directed along intermediate shaft 92 to the ring gear 90 of the third planet set while a "second" flow is transmitted via the sun gear 76 to the pinion carrier 86 whereat the first and second flows are united. It will however be noted that under these conditions the second planetary gear unit 70 rotates as a single unit whereby torque is neither increased or decreased. The torque applied to the pinion carrier 86 of the second planet unit is spilt. The first flow is transmitted via shaft 88 to ring gear 30. The second flow is transmitted via gears 28, 54 to shaft 42 and therefrom via pulleys 38, 36 to shaft 40. The rotation of shaft 40 is, as shown, subsequently fed to sun gear 48 via intermeshing gears 50, 52. The two flows are united at pinion carrier 61.

In the second embodiment, reverse (R) is acheived by coupling clutch 74, releasing clutches 24, 44 and engaging the band brake 82. Under these conditions, as the pinion carrier 78 is held stationary the rotation of ring gear 84 is reversed with respect to that which occurs in the forward drive ranges, and thus rotates in a direction opposite that to which sun gear 76 is rotated. Accordingly, torque flows via pinion carrier 86 to shaft 88 whereat the torque flow is split. The first flow is transmitted to ring gear 30 while the second is transmitted via gears 28, 54, shaft 42, pulleys 38 and 36 to shaft 40. The rotation of shaft 40 is, as shown, transmitted via gears 50 and 52 to sun gear 48. The two flows are united at pinion carrier 61.

It will of course be appreciated that this arrangement also provides the advantages inherent in the first embodiment.

WHAT IS CLAIMED IS

1.   A transmission comprising:

an input shaft;

a first differential gear unit including first,
second and third elements;

a first clutch for selectively establishing a
drive .connection between said input shaft and said
first element;

a .stepless speed change device having first and
second shafts the revolution ratio between which is
continuously variable between predetermined limits,
said first shaft being arranged in drive connection
with said second element and said second shaft being
arranged in drive connection with said first element;

a second clutch for selectively establishing a
drive connection between said input shaft and said
first shaft of said stepless change speed device; and

an output shaft connected to said third element.

2.   A transmission as claimed in claim 1, further
comprising:

. second and third differential gear units each
containing first, second and third elements,

a third clutch for selectively connecting said second and third differential gear units with said input shaft,

said second and third differential units being operatively interposed between said first clutch and said first element of said first differential gear unit.

3. A transmission as claimed in claim 2, wherein:
the first element of said second differential gear unit is connected to the first element of said first differential gear unit and the third element of said third differential gear unit,

the second elements of said second and third differential gear units are connected to said third clutch,

the third element of said second differential gear unit is connected to a chassis of said transmission through a one-way clutch and selectively connectable with said chassis through a brake, and

the first element of said third differential gear unit is connected with said second clutch.

4. A transmission as claimed in claim 2, wherein said first, second and third differential gear units take the form of planetary gear units,

said first, second and third elements respectively taking the form of a ring gear, a sun gear and a pinion carrier on which pinion gears operatively connecting said sun and ring gears, are carried.

5. A transmission as claimed in claim 1, further comprising: a one way clutch operatively interposed between said input shaft and said second clutch, said one-way clutch being arranged to establish a one-way drive connection between said input shaft and said first shaft and to permit said first shaft to overrun the input from said one-way clutch when said second clutch is uncoupled.

6. A transmission as claimed in claim 1, wherein said stepless speed changing device takes the form of first and second pulleys the effective diameters of which are selectively variable, said first and second pulleys being mounted on said first and second shafts respectively and operatively interconnected by a belt.

FIG.1

PRIOR ART

0105515

1/8

PLANETARY GEAR UNIT

SECOND CLUTCH

FIRST CLUTCH

INPUT SHAFT

OUTPUT SHAFT

HYDROSTATIC STEPLESS SPEED CHANGE DEVICE

FIG. 2

1  2  6  10

1A

11

1B

5  3  9  4

8

FIG. 3

FIG. 4

418

## FIG. 5

LOW (I)

## FIG. 6

HIGH (II)

# FIG. 7

0105515 ··

FIG. 8

0105515

## FIG. 9

LOW(I)

## FIG. 10

MED (II)

FIG. 11

HIGH (III)

FIG. 12

REVERSE (R)

0105515

8/8

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | MACHINE DESIGN, June 19, 1975 "Wide speed range", page 20, left-hand column | 1,6 | F 16 H   37/08<br>F 16 H   47/04 |
| A | US-A-2 830 468  (R.W. WARING) | | |
| D,A | US-A-3 988 949  (WESELOH et al.) | | |
| | ----- | | |

**TECHNICAL FIELDS SEARCHED (Int. Cl. ³)**

F 16 H   37/00
F 16 H   47/00

| | | |
|---|---|---|
| The present search report has been drawn up for all claims | | |
| Place of search<br>BERLIN | Date of completion of the search<br>30-11-1983 | Examiner<br>LEMBLE Y.A.F.M. |